# EUROPÄISCHE PATENTSCHRIFT

(11) **EP 0 624 986 B1**
(45) Veröffentlichungstag und Bekanntmachung des Hinweises auf die Patenterteilung: **04.08.1999**
(21) Anmeldenummer: 94107185.4
(22) Anmeldetag: 07.05.1994
(51) Int. Cl.: H04N 7/14

(54) **Bildanrufbeantworter**
Automatic answering video telephone
Répondeur vidéotéléphonique

(30) Priorität: 14.05.1993 DE 4316168
(43) Veröffentlichungstag der Anmeldung: 17.11.1994
(73) Patentinhaber: ALCATEL, 75008 Paris (FR)
(72) Erfinder: Kopp, Dieter, D-71282 Hemmingen (DE); Müller, Detlef, D-71272 Renningen (DE)
(74) Vertreter: Schätzle, Albin, Dipl.-Phys.

(56) Entgegenhaltungen:
- PATENT ABSTRACTS OF JAPAN vol. 15, no. 459 (E-1136) 21. November 1991 & JP-A-03 196 759 (FUJITSU GENERAL LTD) 28. August 1991
- PATENT ABSTRACTS OF JAPAN vol. 15, no. 408 (E-1123) 17. Oktober 1991 & JP-A-03 166 888 (NEC CORP) 18. Juli 1991
- PATENT ABSTRACTS OF JAPAN vol. 17, no. 253 (E-1367) 19. Mai 1993 & JP-A-04 372 294 (MURATA MACH LTD) 25. Dezember 1992
- PATENT ABSTRACTS OF JAPAN vol. 15, no. 494 (E-1145) 13. Dezember 1991 & JP-A-03 216 091 (HITACHI LTD) 24. September 1991
- PATENT ABSTRACTS OF JAPAN vol. 13, no. 213 (E-759) 18. Mai 1989 & JP-A-01 024 688 (HITACHI LTD) 26. Januar 1989
- PATENT ABSTRACTS OF JAPAN vol. 15, no. 453 (E-1134) 18. November 1991 & JP-A-03 191 648 (CANON INC) 21. August 1991
- PATENT ABSTRACTS OF JAPAN vol. 15, no. 304 (E-1096) 5. August 1991 & JP-A-03 108 857 (NEC CORP) 9. Mai 1991

## Beschreibung

Die Erfindung betrifft einen Bildanrufbeantworter gemäß dem Oberbegriff des Anspruchs 1.

Ein solcher Bildanrufbeantworter ist aus der nicht vorveröffentlichten Patentanmeldung mit dem Aktenzeichen P 42 36 176.1 (DE-A-42 36 176) bekannt. Durch den dort beschriebenen Bildanrufbeantworter kann jederzeit unabhängig davon, ob ein angerufener Teilnehmer eines Telekommunikationsnetzes gerade erreichbar ist, Bewegt- und/oder Standbildinformation vorzugsweise zusammen mit Sprachinformation, zu diesem angerufenen Teilnehmer von einem anderen rufenden Teilnehmer des Telekommunikationsnetzes übertragen werden. Der Bildanrufbeantworter hat, um eine abgespeicherte Bildansage zum rufenden Teilnehmer übermitteln zu können und ankommende Bild- und/oder Sprachinformation abspeichern zu können, als Speichermittel einen Videorekorder. Als Speichermittel ist auch ein sogenannter Video-RAM verwendbar, der die Bild- und/oder Sprachinformationen digital abspeichert. Da laut Stand der Technik alle ankommenden Bild- und Sprachinformationen abgespeichert werden, entstehen selbst bei großer Datenkompression und damit schlechter Qualität sehr schnell sehr große Datenmengen. Die Speicherkapazität des Video-RAMs ist daher schon bei wenigen hinterlassenen Nachrichten vollkommen belegt.

Der Erfindung liegt die Aufgabe zugrunde, einen Bildanrufbeantworter für Bild- oder Bild- und Sprachinformationen anzugeben und die beschriebenen Nachteile des Stands der Technik auf technisch einfache Weise zu umgehen.

Erfindungsgemäß wird diese Aufgabe durch die technische Lehre des Patentanspruchs 1 gelöst.

Vorteilhafterweise kann der rufende Teilnehmer durch eine entsprechende Signalisierung dem Bildanrufbeantworter mitteilen, welche Informationen er wesentlich für das Abspeichern in dem Speichermittel hält.

Ein weiterer Vorteil des erfindungsgemäßen Bildanrufbeantworters ist, daß er auch während eines zustandegekommenen Gesprächs zwischen den Teilnehmern des Telekommunikationsnetzes zur Abspeicherung wichtiger Informationen, z.B. die eines wichtigen Dokuments, quasi als Notizbuch, benutzt werden kann.

Weitere vorteilhafte Ausgestaltungen der Erfindung sind den abhängigen Ansprüchen zu entnehmen.

Zum besseren Verständnis der Erfindung ist im folgenden ein Ausführungsbeispiel anhand einer Figur beschrieben.

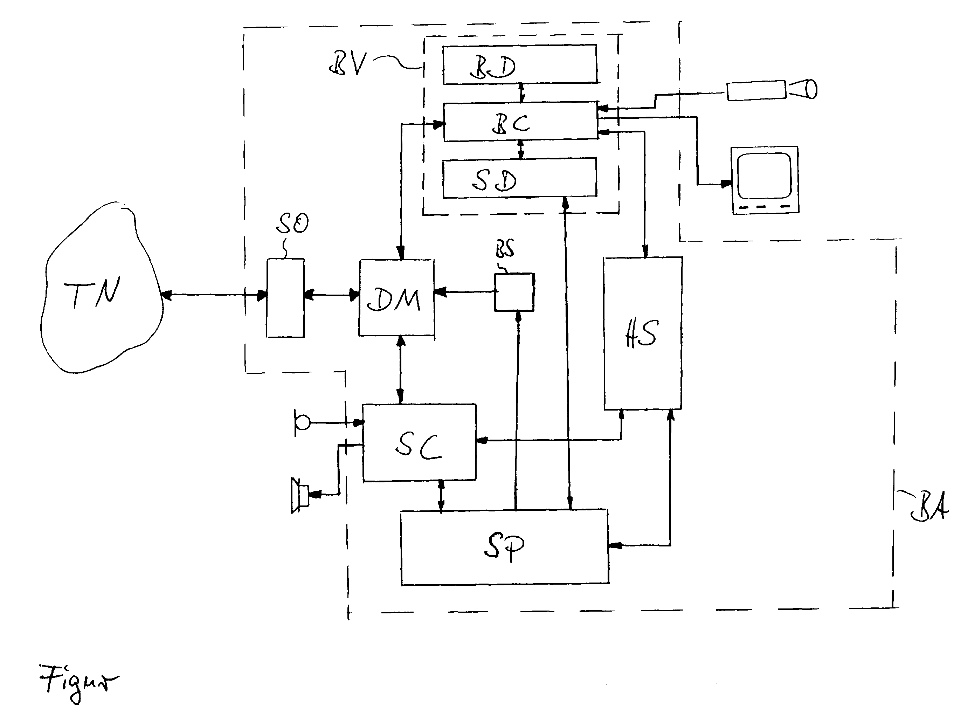

Die Figur zeigt das Ausführungsbeispiel eines erfindungsgemäßen Bildanrufbeantworters.

Ein in der Figur abgebildetes Ausführungsbeispiel zeigt einen Bildanrufbeantworter BA mit einem Halbleiterspeicher HS, der über bidirektionale Datenleitungen mit einem Steuerprozessor SP, einem Sprachcodec SC und einem Bildcodec BC verbunden ist. Der Halbleiterspeicher HS kann beispielsweise ein Flash EEPROM sein. Der Bildcodec BC bildet mit einem Bildwechseldetektor BD und einem Signalisierungsdekoder SD eine Einheit BV zur Auswertung und Bearbeitung von Bildinformation und ist mit diesen und einem Daten-Multiplexer/Demultiplexer DM über bidirektionale Datenleitungen verbunden. Bildwechseldetektor BD und Signalisierungsdekoder SD können auch in dem Bildcodec BC integriert sein.

Der Sprachcodec SC ist über bidirektionale Datenleitungen mit dem Daten-Multiplexer/Demultiplexer DM und dem Steuerprozessor SP verbunden und dieser weiterhin bidirektional mit dem Signalisierungsdekoder SD, und damit mit der Einheit BV zur Auswertung und Bearbeitung von Bildinformation. Von dem Steuerprozessor SP besteht eine unidirektionale Verbindung zu einem Signalisierungsmittel BS zur Erzeugung einer Signalisierung zur Bestätigung einer Abspeicherung von Bild- und/oder Sprachinformation in dem Halbleiterspeicher HS. Das Signalisierungsmittel BS ist daher mit dem Daten-Multiplexer/Demultiplexer DM und dieser über eine Netzschnittstelle SO mit einem Telekommunikationsnetz TN verbunden. Das Telekommunikationsnetz TN ist ein ISDN-Netz mit 64 k bit/s Bitfolgefrequenz, kann aber ebenso ein Breitband-ISDN-Netz, wie das Vorläufer-Breitbandnetz VBN der Deutschen Bundespost Telekom, oder auch ein ATM (Asynchronous Transfer Mode)-Netz oder ein MAN (Metropolitan Area Network) sein. Der Bildanrufbeantworter BA weist in diesen Fällen entsprechende Netzschnittstellen auf.

Für das Erfüllen der Funktion eines Bildanrufbeantworters als solchem, ist es häufig nicht notwendig ein lippensynchrones Bild abzuspeichern. Vielmehr genügt bei der Übertragung von Nachrichten zum angerufenen Teilnehmer die Abspeicherung eines Einzelbildes, beispielsweise auch eines Dokumentenbildes, vorzugsweise mit unterlegter Sprache. Auch für die zur Begrüßung des rufenden Teilnehmers im Speichermittel abgelegte Bildansage ist ein Einzelbild ausreichend. Es kann sogar verwirrend auf den rufenden Teilnehmer wirken, wenn er ein lippensynchrones Bewegtbild des angerufenen Teilnehmers erhält, obwohl dieser nicht anwesend ist. Erfindungsgemäß werden daher die für den Informationsfluß zwischen den Teilnehmern wesentlichen Daten im Halbleiterspeicher abgespeichert.

Möchte nun ein anrufender Bildtelefonteilnehmer des Telekommunikationsnetzes TN mit einem angerufenen Bildtelefonteilnehmer des Telekommunikationsnetzes TN sprechen, der allerdings nicht anwesend ist und daher den Bildanrufbeantworter BA eingeschaltet hat, so steuert der Steuerprozessor SP, nachdem er den Gesprächwunsch erkannt hat, den Bildanrufbeantworter BA in einen Abspielmodus. Das heißt, ein im Halbleiterspeicher HS abgespeichertes Einzelbild wird, entsprechend mit ebenfalls im Halbleiterspeicher HS abgespeicherten Sprachinformationen unterlegt, als eine eine Begrüßung darstellende Bildansage über das Telekommunikationsnetz TN zum anrufenden Bildtelefonteilnehmer übertragen. Der Steuerprozessor SP steuert diese Prozedur dabei derart, daß die für das Einzelbild benötigten Bildinformationen im Bildcodec BC und die benötigten Sprachinformationen im Sprachcodec SC dekomprimiert, anschließend im Daten-Multiplexer/Demultiplexer DM gemultiplext und über die Netzschnittstelle SO so übertragen werden können, daß sie der anrufende Bildtelefonteilnehmer zeitsynchron empfängt. Danach kann der anrufende Bildtelefonteilnehmer Bewegt- und/oder Einzelbildinformationen, vorzugsweise ebenfalls mit Sprachinformation kombiniert, zu dem Bildanrufbeantworter BA senden. Die über das Telekommunikationsnetz TN und die Netzschnittstelle SO ankommenden Bild- und Sprachinformationen werden von dem Daten-Multiplexer/Demultiplexer DM demultiplext und die Sprachinformationen dem Sprachcodec SC und die Bildinformationen dem Bildcodec BC und damit der Einheit BV zur Auswertung und Bearbeitung von Bildinformation zugeführt. Der in dieser Einheit BV angeordnete Bildwechseldetektor BD wertet die ankommenden Bildinformationen nach vorgegebenen Kriterien aus, so daß, gesteuert durch den Steuerprozessor SP, nur vorgegebene, Einzelbildern entsprechende Bildinformationen in komprimierter Form im Halbleiterspeicher HS abgespeichert werden. Vorgegebene Kriterien können z.B. ein festgelegter Zeitabstand, eine mehr oder weniger große Änderung des Informationsgehalts der ankommenden Bildinformationen oder auch eine Kombination dieser beiden Kriterien sein. Das heißt, hat sich der Informationsgehalt der ankommenden Bildinformationen nach einer festgelegten Zeit, z.B. 10 Sekunden, nicht geändert, so wird die folgende Bildinformation als Einzelbild im Halbleiterspeicher HS abgespeichert. Dabei kann vorzugsweise der von der ISO JPEG (Joint Photographics Experts Group) empfohlene Kompressionsalgorithmus benutzt werden.

Für die Codierung der ankommenden Sprachinformationen im Sprachcodec SC wird vorzugsweise ein rahmenbasierender Sprachcodec verwendet. Der Steuerprozessor SP erzeugt eine Controldatei, in der die zeitliche Zuordnung von im Halbleiterspeicher HS abzuspeichernder Bildinformation und zugehöriger Sprachinformation abgelegt wird. Diese Controldatei wird ebenfalls im Halbleiterspeicher HS abgespeichert.

Zusätzlich zum Bildwechseldetektor BD ist in der Einheit BV zur Auswertung und Bearbeitung von Bildinformation der Signalisierungsdekoder SD angeordnet. Hat der anrufende Bildtelefonteilnehmer eine Signalisierung zum Bildanrufbeantworter BA gesendet, die diesem angeben soll, daß ein oder mehrere bestimmte Einzelbilder als wichtige Information abgespeichert werden sollen, so ist der Signalisierungsdekoder SD in der Lage, diese ankommende Signalisierung auszuwerten. Der Steuerprozessor SP steuert dann in der oben beschriebenen Weise die Abspeicherung dieser wichtigen Bildinformationen und der eventuell zugehörigen Sprachinformationen. Bei einer Signalisierung des anrufenden Bildtelefonteilnehmers im H.221 In-Band-Protokoll kann das Signalisieren dieser bestimmten Einzelbilder mittels der sogenannten Multi-Byte-Extension Befehle (MBE) angezeigt werden, bei einer Signalisierung im H.261 Protokoll mittels des sogenannten Picture-Extra-Insertion Bit (PEI) und des PSPARE Felds. Die Protokolle H.221 und H.261 sind Empfehlungen des CCITT.

Es ist beispielsweise möglich durch Betätigung einer entsprechend belegten Taste des anrufenen Bildtelefonteilnehmers dem Bildanrufbeantworter BA zu signalisieren, daß das nächste ankommende Einzelbild eine Bildinformation mit wesentlichem Informationsgehalt darstellt und unbedingt abgespeichert werden sollte. Bei einer solchen manuellen Anweisung zur Einzelbildabspeicherung kann auf den Bildwechseldetektor BD verzichtet werden.

Eine entsprechende Prozedur, die zur Abspeicherung wichtiger Einzelbilder im Halbleiterspeicher HS führt, ist auch während eines zustandegekommenen Gesprächs zwischen anrufendem und angerufenem Bildtelefonteilnehmer des Telekommunikationsnetzes TN möglich. Der Bildanrufbeantworter wird dann als eine Art Notizbuch benutzt.

Es ist weiterhin möglich, zur Bestätigung der Abspeicherung der als wichtig signalisierten Einzelbilder im Bildanrufbeantworter BA ein Mittel BS, das eine entsprechende Bestätigungssignalisierung erzeugt, anzubringen. Der Steuerprozessor SP steuert die Erzeugung dieser Bestätigungssignalisierung, die dann über den Daten-Multiplexer/Demultiplexer DM und die Netzschnittstelle SO zum anrufenden Bildtelefonteilnehmer übermittelt wird.

## Patentansprüche

1. Bildanrufbeantworter (BA) mit wenigstens
- einem Empfang mittel (DM) für einen Empfang einer ersten Anzahl von Signalen die wenigstens
- ein erstes zu einem ersten Bild gehörendes Bildsignal umfassen,
- ein zweites zu einem zweiten Bild gehörendes Bildsignal umfassen, und
- ein drittes Signal umfassen,
dadurch gekennzeichnet, daß der Bildanrufbeantworter versehen ist mit
- einem mit dem Empfangmittel gekoppelten Vergleichmittel (BD,SD) für einen Vergleich von wenigstens zwei Signalen und für eine Generation eines Ergebnissignals,
- einem mit dem Empfangmittel und mit dem Vergleichmittel gekoppelten Auswahlmittel (SP,BC) für eine Auswahl einer zweiten Anzahl von Signalen in Reaktion auf das Ergebnissignal, wobei die zweite Anzahl der Signale kleiner ist als die erste Anzahl der Signale, und wobei die zweite Anzahl der Signale wenigstens ein Bildsignal und höchstens eines der ersten und zweiten Bildsignale umfasst, und
- einem mit dem Auswahlmittel gekoppelten Speichermittel (HS) für eine Speicherung der zweiten Anzahl der Signale.

2. Bildanrufbeantworter nach Anspruch 1, dadurch gekennzeichet, daß das dritte Signal ein Anzeigesignal ist, wobei die wenigstens zwei zu vergleichenden Signale das Anzeigesignal and ein im Bildanrufbeantworter gespeichertes Signal umfassen, und wobei das Ergebnissignal anzeigt welches Signal der Bildsignale ausgewählt und gespeichert werden muß.

3. Bildanrufbeantworter nach Anspruch 2, dadurch gekennzeichnet, daß das Vergleichmittel mit einem Signalisierungsdekoder (SD) für den Vergleich des Anzeigesignals und des gespeicherten Signals versehen ist.

4. Bildanrufbeantworter nach Anspruch 1, dadurch gekennzeichnet, daß das dritte Signal ein drittes zu einem dritten Bild gehörendes Bildsignal ist, wobei die wenigstens zwei zu vergleichenden Signale ein weiteres Anzeigesignal und ein im Bildanrufbeantworter gespeichertes Signal umfassen, und wobei das Ergebnissignal anzeigt welches Signal der Bildsignale ausgewählt und gespeichert werden muß.

5. Bildanrufbeantworter nach Anspruch 4, dadurch gekennzeichnet, daß das Vergleichmittel mit einem Signalisierungsdekoder (SD) für den Vergleich des weiteren Anzeigesignals und des gespeicherten Signals versehen ist.

6. Bildanrufbeantworter nach Anspruch 1, dadurch gekennzeichnet, daß das dritte Signal ein drittes zu einem dritten Bild gehörendes Bildsignal ist, wobei die wenigstens zwei zu vergleichenden Signale wenigstens zwei der Bildsignale umfassen, und wobei das Ergebnissignal anzeigt welches Signal der Bildsignale ausgewählt und gespeichert werden muß.

7. Bildanrufbeantworter nach Anspruch 6, dadurch gekennzeichnet, daß das Vergleichmittel mit einem Bildwechseldetektor (BD) für den Vergleich der Bildsignale versehen ist.

## Claims

1. A video-telephone answering set (BA) having at least
- one receiving means (DM) for receiving a first number of signals which comprise at least
- a first picture signal belonging to a first picture,
- a second picture signal belonging to a second picture, and
- a third signal,
characterized in that the video-telephone answering set further comprises
- a comparing means (BD, SD) coupled to the receiving means for comparing at least two signals and for generating a result signal,
- a selecting means (SP, BC) coupled to the receiving means and the comparing means for selecting a second number of signals in response to the result signal, the second number of signals being less than the first number of signals and comprising at least one picture signal and not more than one of the first and second picture signals, and
- a storage means (HS) coupled to the selecting means for storing the second number of signals.

2. A video-telephone answering set as claimed in claim 1, characterized in that the third signal is an indication signal, with the at least two signals to be compared comprising the indication signal and a signal stored in the video-telephone answering set, and the result signal indicating which signal of the picture signals must be selected and stored.

3. A video-telephone answering set as claimed in claim 2, characterized in that the comparing means comprises a signal decoder (SD) for comparing the indication signal with the stored signal.

4. A video-telephone answering set as claimed in claim 1, characterized in that the third signal is a third picture signal belonging to a third picture, with the at least two signals to be compared comprising a further indication signal and a signal stored in the video-telephone answering set, and the result signal indicating which signal of the picture signals must be selected and stored.

5. A video-telephone answering set as claimed in claim 4, characterized in that the comparing means comprises a signaling decoder (SD) for comparing the further indication signal with the stored signal.

6. A video-telephone answering set as claimed in claim 1, characterized in that the third signal is a third picture signal belonging to a third picture, with the at least two signals to be compared comprising at least two of the picture signals, and the result signal indicating which signal of the picture signals must be selected and stored.

7. A video-telephone answering set as claimed in claim 6, characterized in that the comparing means comprises a picture-change detector (BD) for comparing the picture signals.

## Revendications

1. Répondeur vidéotéléphonique (BA) comportant au moins
- des moyens de réception (DM) pour la réception d'une première série de signaux comportant au moins
- un premier signal vidéo appartenant à une première image,
- un deuxième signal vidéo appartenant à une deuxième image, et
- un troisième signal,
caractérisé en ce que le répondeur vidéotéléphonique présente
- des moyens de comparaison (BD, SD) couplés aux moyens de réception pour comparer au moins deux signaux et pour générer un signal résultant,
- des moyens de sélection (SP, BC) couplés aux moyens de réception et aux moyens de comparaison pour sélectionner une deuxième série de signaux en réponse au signal résultant, la deuxième série de signaux étant plus petite que la première série de signaux, et la deuxième série de signaux comportant au moins un signal vidéo et au plus l'un des premier et deuxième signaux vidéo, et
- des moyens de mémorisation (HS) couplés aux moyens de sélection pour mémoriser la deuxième série de signaux.

2. Répondeur vidéotéléphonique selon la revendication 1, caractérisé en ce que le troisième signal est un signal d'indication, les au moins deux signaux à comparer comportant le signal d'indication et un signal mémorisé dans le répondeur vidéotéléphonique, et le signal résultant indiquant quel signal parmi les signaux vidéo doit être sélectionné et mémorisé.

3. Répondeur vidéotéléphonique selon la revendication 2, caractérisé en ce que les moyens de comparaison sont équipés d'un décodeur de signalisation (SD) pour comparer le signal d'indication et le signal mémorisé.

4. Répondeur vidéotéléphonique selon la revendication 1, caractérisé en ce que le troisième signal est un troisième signal vidéo appartenant à une troisième image, les au moins deux signaux à comparer comportant un signal d'indication supplémentaire et un signal mémorisé dans le répondeur vidéotéléphonique, et le signal résultant indiquant quel signal parmi les signaux vidéo doit être sélectionné et mémorisé.

5. Répondeur vidéotéléphonique selon la revendication 4, caractérisé en ce que les moyens de comparaison sont équipés d'un décodeur de signalisation (SD) pour comparer le signal d'indication supplémentaire et le signal mémorisé.

6. Répondeur vidéotéléphonique selon la revendication 1, caractérisé en ce que le troisième signal est un troisième signal vidéo appartenant à une troisième image, les au moins deux signaux à comparer comportant au moins deux des signaux vidéo, et le signal résultant indiquant quel signal parmi les signaux vidéo doit être sélectionné et mémorisé.

7. Répondeur vidéoléléphonique selon la revendication 6, caratérisé en ce que les moyens de comparaison sont équipés d'un détecteur de changement vidéo (BD) pour comparer les signaux vidéo.
